# EUROPÄISCHE PATENTANMELDUNG

(11) **EP 3 496 236 A1**
(43) Veröffentlichungstag der Anmeldung: **12.06.2019**
(21) Anmeldenummer: 18205715.8
(22) Anmeldetag: 12.11.2018
(51) Int. Cl.: H02K 1/27, H02K 1/30

(54) **ROTOR EINER ELEKTRISCHEN MASCHINE**

(30) Priorität: 06.12.2017 DE 102017222099
(71) Anmelder: Baumüller Nürnberg GmbH, 90482 Nürnberg (DE)
(72) Erfinder: SWARTE, Matthias, 90403 Nürnberg (DE); GUTJAHR, Frank, 92268 Etzelwang (DE)
(74) Vertreter: FDST Patentanwälte

(57) **Zusammenfassung**

Die Erfindung betrifft einen Rotor (28) einer elektrischen Maschine, mit einer Welle (26) und einem die Welle (26) zumindest abschnittsweise umgebenden Abschnitt (30). Der Abschnitt (30) weist eine Anzahl an zueinander beabstandeten und in einer axialen Richtung angeordneten Magneten (36) und eine Anzahl an zueinander beabstandeten und in der axialen Richtung angeordneten Polschuhen (44) auf. Jeder Polschuh (44) umfasst einen in einer radialen Richtung (38) außenliegenden ersten Bereich (42), der zwischen in einer tangentialen Richtung (40) benachbarten Magneten (36) angeordnet und symmetrisch bezüglich einer zugeordneten ersten radialen Geraden (48) ist, und einen in der radialen Richtung (38) innenliegenden zweiten Bereich (50), der asymmetrisch bezüglich der jeweils zugeordneten ersten radialen Geraden (48) ist, und der an der Welle (26) angebunden ist. Die Erfindung betrifft ferner eine elektrische Maschine.

## Beschreibung

Die Erfindung betrifft einen Rotor einer elektrischen Maschine, mit einer Welle und einem die Welle zumindest abschnittsweise umgebenden Abschnitt. Die elektrische Maschine ist jeweils insbesondere ein Elektromotor.

Industrieanlagen weisen üblicherweise Aktoren auf, die mittels eines Elektromotors angetrieben sind. So werden beispielsweise bei der Kunststoffverarbeitung und der Kunststoffherstellung etwaige Förderschnecken oder Pressstempel üblicherweise mittels eines Elektromotors angetrieben. Hierbei wird beispielsweise ein Stempel oder eine Schnecke eines Kunststoffspritzgeräts mittels des Elektromotors bewegt. Eine weitere Verwendung von Elektromotoren findet sich zum Beispiel im maritimen Bereich, wobei der Elektromotor beispielsweise in einer Gondel an einem Rumpf eines Schiffs angebracht ist.

Die Elektromotoren sind üblicherweise bürstenlos ausgestaltet und weisen einen Stator mit einer Anzahl an Elektromagneten auf, mittels derer bei Betrieb ein rotierendes Magnetfeld erstellt wird. Der Rotor hingegen ist permanenterregt und weist somit eine Anzahl an Permanentmagneten auf. Zur Befestigung der Permanentmagneten und Formung der mittels dieser bereitgestellten Magnetfelder sind die Permanentmagneten in ein Blechpaket eingebettet oder an diesem befestigt, das auf eine Welle des Rotors aufgesetzt ist. Hierbei ist es möglich, dass sich in dem Blechpaket zwischen den Permanentmagneten magnetische Kurzschlüsse ausbilden, die den Wirkungsgrad des Elektromotors verringern. Aus DE 10 2014 001 243 A1 ist ein Rotor bekannt, bei dem eine Ausbildung derartiger Kurzschlüsse vermieden oder zumindest reduziert ist.

Der Erfindung liegt die Aufgabe zugrunde, einen besonders geeigneten Rotor einer elektrischen Maschine sowie eine besonders geeignete elektrische Maschine anzugeben, wobei vorteilhafterweise eine Herstellung vereinfacht ist.

Hinsichtlich des Rotors wird diese Aufgabe durch die Merkmale des Anspruchs 1 und hinsichtlich der elektrischen Maschine durch die Merkmale des Anspruchs 10 und durch die Merkmale des Anspruchs 11 erfindungsgemäß gelöst. Vorteilhafte Weiterbildungen und Ausgestaltungen sind Gegenstand der jeweiligen Unteransprüche.

Der Rotor ist ein Bestandteil einer elektrischen Maschine. Die elektrische Maschine ist beispielsweise bürstenbehaftet. Besonders bevorzugt jedoch ist die elektrische Maschine bürstenlos ausgestaltet. Beispielsweise ist die elektrische Maschine ein Generator. Besonders bevorzugt jedoch ist die elektrische Maschine ein Elektromotor, insbesondere ein bürstenloser Elektromotor. Die elektrische Maschine ist insbesondere eine Synchronmaschine, wie ein Synchronmotor. Vorzugsweise ist bei Betrieb die elektrische Maschine mit einem Umrichter elektrisch verbunden und wird mittels dessen betrieben oder umfasst den Umrichter. Die elektrische Maschine weist beispielsweise eine Leistung zwischen 30 kW und 150 kW, zwischen 40 kW und 140 kW oder zwischen 60 kW und 100 kW und insbesondere gleich 80 kW auf, wobei jeweils zum Beispiel eine Abweichung von 10 kW, 5 kW, 2 kW oder 0 kW vorhanden ist.

Geeigneterweise weist die elektrische Maschine eine Drehzahl, beispielsweise eine Nenndrehzahl oder maximale Drehzahl, zwischen 200 U/min. und 8.000 U/min., zwischen 300 U/min. und 6.000 U/min., zwischen 500 U/min. und 5.000 U/min. oder zwischen 1.000 U/min. und 4.000 U/min. auf, wobei insbesondere eine Abweichung von 100 U/min., 50 U/min., 20 U/min. oder 0 U/min. vorhanden ist. Besonders bevorzugt weist die elektrische Maschine ein Drehmoment, beispielsweise ein Maximal- und/oder Nenndrehmoment zwischen 100 Nm und 20.000 Nm, zwischen 165 Nm und 17.500 Nm, zwischen 200 Nm und 15.000 Nm, zwischen 500 Nm und 10.000 Nm oder zwischen 5.000 Nm und 8.000 Nm auf, wobei insbesondere jeweils eine Abweichung von 50 Nm, 20 Nm, 10 Nm oder 0 Nm vorhanden ist.

Die elektrische Maschine ist beispielsweise ein Bestandteil einer Industrieanlage, wie einer Servopresse. Mit anderen Worten wird mittels der elektrischen Maschine insbesondere eine Presse angetrieben. Alternativ hierzu wird die elektrische Maschine bevorzugt bei der Kunststoffverarbeitung und/oder der Kunststoffherstellung verwendet. Beispielsweise wird ein Extruder oder ein sonstiger Bestandteil einer Kunststoffspritzgussmaschine, wie ein Stempel mittels der elektrischen Maschine angetrieben. Alternativ hierzu ist die elektrische Maschine ein Bestandteil eines Schiffsantriebs, welcher insbesondere vorgesehen und eingerichtet ist, innerhalb einer Gondel an einem Rumpf eines Schiffs montiert zu werden. In einer weiteren Alternative ist die elektrische Maschine ein Bestandteil eines Fahrrads, wie eines Pedelecs, und dient dem Vortrieb des Fahrrads.

Der Rotor weist eine Welle auf, die beispielsweise aus einem Stahl, insbesondere aus einem Edelstahl erstellt ist. Geeigneterweise erstreckt sich die Welle in einer axialen Richtung (Axialrichtung). Die Welle ist insbesondere vorgesehen und eingerichtet, drehbar bezüglich einer Rotationsachse gelagert zu werden, die vorzugsweise parallel zur axialen Richtung verläuft. Die Welle ist beispielsweise im Wesentlichen zylinderförmig oder hohlzylinderförmig ausgestaltet, wobei die Zylinderachse geeigneterweise gleich der Rotationsachse ist. Ferner weist der Rotor einen Abschnitt auf, der die Welle zumindest abschnittsweise umgibt. Zweckmäßigerweise wird die Welle in einer radialen Richtung von dem Abschnitt umgeben, also insbesondere senkrecht zu einer etwaigen Zylinderachse der Welle. Der Abschnitt ist vorzugsweise im Wesentlichen hohlzylindrisch ausgestaltet.

Der Abschnitt weist eine Anzahl an Magneten auf, die entlang der axialen Richtung angeordnet sind, also insbesondere parallel zur Zylinderachse und/oder der Rotationsachse der Welle. Mit anderen Worten verlaufen die Magnete in der axialen Richtung. Die Magnete sind vorzugsweise zueinander beabstandet und somit nicht in direktem mechanischem Kontakt. Beispielsweise ist zumindest eienr der Maggneten aus mehreren Teilmagneten zusammengesetzt. Die Anzahl der Magnete ist vorzugsweise gerade und/oder insbesondere zwischen zwei Magneten und zwanzig Magneten oder zwischen vier Magneten und zwölf Magneten. Die Magneten sind beispielsweise Elektromagneten. Besonders bevorzugt jedoch sind die Magnete Permanentmagnete und insbesondere aus einem Ferrit oder NdFeB gefertigt. Vorzugsweise sind die Magnete baugleich und beispielsweise im Wesentlichen quaderförmig ausgestaltet.

Ferner weist der Abschnitt eine Anzahl an zueinander beabstandeten Polschuhen auf. Die Anzahl der Polschuhe ist zweckmäßigerweise gleich der Anzahl der Magnete, und/oder die Polschuhe sind vorzugsweise zueinander baugleich. Die Polschuhe sind in der axialen Richtung angeordnet. Mit anderen Worten verlaufen die Polschuhe im Wesentlichen in axialer Richtung. Jeder Polschuh weist einen ersten Bereich und einen zweiten Bereich auf, wobei der erste Bereich in einer radialen Richtung außenliegend und der zweite Bereich in der radialen Richtung innenliegend angeordnet ist. Somit weist jeder erste Bereich bezüglich des zweiten Bereichs des gleichen Polschuhs jeweils einen größeren Abstand zu der Welle auf. Die ersten Bereiche sind jeweils in einer tangentialen Richtung zwischen den jeweils benachbarten Magneten angeordnet. Somit sind die Magnete mittels der ersten Bereiche in der tangentialen Richtung zueinander beabstandet. Insbesondere sind die Magnete und die ersten Bereiche in der tangentialen Richtung abwechselnd angeordnet. Vorzugsweise weisen die ersten Bereiche im Wesentlichen den gleichen Abstand zu der Welle wie die Magnete auf.

Jeder erste Bereich ist symmetrisch bezüglich einer zugeordneten ersten radialen Geraden. Insbesondere ist hierbei jeder erste Bereich achsensymmetrisch bezüglich der jeweils zugeordneten ersten radialen Geraden, und es sind somit genauso viele erste radiale Geraden vorhanden wie Polschuhe. Mit anderen Worten ist jedem der Polschuhe eine der ersten radialen Geraden zugeordnet. Der zweite Bereich jedes Polschuhs ist asymmetrisch bezüglich der jeweils zugeordneten ersten radialen Geraden. Mit anderen Worten ist der zweite Bereich nicht symmetrisch bezüglich der ersten Geraden, zu der der erste Bereich des gleichen Polschuhs symmetrisch ist. Jeder zweite Bereich ist an der Welle angebunden, beispielsweise befestigt. Somit erfolgt auch die Befestigung des jeweiligen ersten Bereichs mittels des zweiten Bereichs an der Welle. Vorzugsweise ist jeder der ersten Bereiche von der Welle beabstandet.

Da die Polschuhe zueinander beabstandet sind, ist es ermöglicht, die Polschuhe einzeln zu fertigen, was eine Handhabung erleichtert. Auch ist bei vergleichsweise groß bauenden Rotoren das Material zur Erstellung der Polschuhe vergleichsweise kleinvolumig, was eine Herstellung vereinfacht. Zudem ist es ermöglicht, vergleichsweise klein bauende und somit kostengünstige Werkzeuge heranzuziehen. Aufgrund der Beabstandung ist ein magnetischer Kurzschluss der Polschuhe untereinander ausgeschlossen. Aufgrund der Asymmetrie der zweiten Bereiche wird mittels der Positionierung jedes zweiten Bereiches der jeweilige erste Bereich hinsichtlich der Welle ausgerichtet. Folglich ist es ermöglicht, mit einem Polschuh unterschiedliche Konfigurationen des Abschnitts zu realisieren. Aufgrund der Symmetrie des ersten Bereichs ist hierbei eine Anpassung der Magnete nicht erforderlich. Zudem ist aufgrund der asymmetrischen Ausgestaltung der zweiten Bereiche eine Beeinflussung von Magnetfeldlinien der Magnete ermöglicht, sodass ein Wirkungsgrad erhöht werden kann.

Vorzugsweise sind die Polschuhe zueinander baugleich, was eine Herstellung weiter vereinfacht. Geeigneterweise ist der erste Bereich jedes Polschuhs an dem jeweiligen zweiten Bereich des gleichen Polschuhs angebunden, insbesondere angeformt. Zum Beispiel ist jeder Polschuh einstückig ausgestaltet. Besonders bevorzugt weist jeder Polschuh ein Blechpaket auf, und ist insbesondere mittels dessen gebildet. Das Blechpaket weist zweckmäßigerweise eine Anzahl an Blechen auf, die in der axialen Richtung übereinander gestapelt und aneinander befestigt sind, beispielsweise mittels Kleben oder Stanzpaketierens. Hierbei weist jedes Blech zweckmäßigerweise sowohl einen Teil des ersten Bereichs und des jeweiligen zweiten Bereichs auf. Geeigneterweise ist jeder Polschuh aus einem ferromagnetischen Material erstellt, insbesondere Trafoblech, sofern der Polschuh aus dem Blechpaket besteht. Geeigneterweise sind die Magnete sogenannte vergrabene Magnete und stehen vorzugsweise in der radialen Richtung bezüglich der Polschuhe nicht über. Mit anderen Worten ist der maximale Abstand der Magnete zu der Welle kleiner als der maximale Abstand der Polschuhe zu der Welle. Geeigneterweise sind die Magnete drehsymmetrisch bezüglich einer etwaigen Rotationsachse der Welle angeordnet, wobei der Symmetriewinkel dem Bruch aus 360° und der Anzahl der Magnete entspricht. Vorzugsweise sind die Magnete in tangentialer Richtung magnetisiert, wobei jeweils gleiche Magnetpole aufeinander zu gerichtet sind. Mit anderen Worten unterscheidet sich die Magnetisierungsrichtung jeweils benachbarter Magnete. Somit erfolgt ein Austritt der Magnetlinien aus dem Rotor im Bereich der Polschuhe, insbesondere aus den jeweiligen ersten Bereichen.

In einer besonders bevorzugten Ausführungsform der Erfindung weist der Rotor einen weiteren Abschnitt auf, der bezüglich des Abschnitts in der axialen Richtung versetzt ist. Vorzugsweise sind die beiden Abschnitte in direktem mechanischem Kontakt. Der weitere Abschnitt und der Abschnitt sind zueinander baugleich, sodass eine Herstellung vereinfacht und insbesondere Herstellungskosten reduziert sind. Geeigneterweise sind der Abschnitt und der weitere Abschnitt konzentrisch zueinander angeordnet, insbesondere zu der Rotationsachse des Rotors. Der weitere Abschnitt umgibt die Welle zweckmäßigerweise ebenfalls zumindest abschnittsweise, und die Welle ragt besonders bevorzugt sowohl durch den Abschnitt als auch den weiteren Abschnitt hindurch. Der weitere Abschnitt ist bezüglich des Abschnitts um eine radiale Achse gedreht, insbesondere um 180°. Mit anderen Worten ist der Abschnitt in den weiteren Abschnitt mittels einer Drehung um 180° um die radiale Achse und gegebenenfalls einem Versatz in der axialen Richtung überführbar. Zweckmäßigerweise liegen die beiden Abschnitte an den jeweils zueinander zugewandten Stirnflächen aneinander an, vorzugsweise mechanisch direkt.

Geeigneterweise sind die ersten Bereiche des Abschnitts und die ersten Bereiche des weiteren Abschnitts in der tangentialen Richtung zueinander versetzt. Mit anderen Worten fluchten die ersten Bereiche des Abschnitts und des weiteren Abschnitts nicht. Somit sind auch zweckmäßigerweise die Magnete in der tangentialen Richtung zueinander versetzt. Folglich weist der Rotor eine Schrägung auf, sodass ein Rastmoment der elektrischen Maschine reduziert ist. Geeigneterweise fluchtet jeder der zweiten Bereiche des Abschnitts mit jeweils einem der zweiten Bereiche des weiteren Abschnitts. Mit anderen Worten ist jedem zweiten Bereich des Abschnitts einer der zweiten Bereiche des weiteren Abschnitts zugeordnet, und diese fluchten miteinander, insbesondere in der axialen Richtung. Geeigneterweise liegen die einander zugeordneten zweiten Bereiche deckungsgleich stirnseitig aneinander an. Infolgedessen ist eine Anbindung des Abschnitts und des weiteren Abschnitts an der Welle vereinfacht, da diese jeweils an der gleichen Stelle in tangentialer Richtung mit der Welle angebunden, insbesondere in mechanischem Kontakt, sind. Auch ist eine Fertigung der Welle vereinfacht. Dahingegen sind aufgrund der asymmetrischen Ausgestaltung der zweiten Bereiche und der symmetrischen Ausgestaltung der ersten Bereiche ohne vergleichsweise aufwendigen Montage die ersten Bereiche des Abschnitts bezüglich der ersten Bereiche des weiteren Abschnitts und somit auch die Magnete des Abschnitts bezüglich der Magnete des weiteren Abschnitts in der tangentialen Richtung versetzt.

Vorzugsweise weist der Querschnitt, insbesondere senkrecht zur axialen Richtung, jedes der ersten Bereiche ein Ringsegment auf. Beispielsweise ist der Querschnitt jedes der ersten Bereiche mit einem derartigen Ringsegment gebildet. Somit ist eine Herstellung vereinfacht, und ein Materialbedarf ist im Vergleich zu beispielsweise einem vollständigen Ring verringert. Auch ist es ermöglicht, vergleichsweise schmale Bleche zur Erstellung der Polschuhe zu verwenden, sofern dieses ein Blechpaket aufweist. Vorzugsweise ist an jedem Ringsegment ein in der tangentialen Richtung verlaufender Vorsprung angebunden, beispielsweise angeformt. Der Vorsprung ist bezüglich jeweils eines der benachbarten Magneten in der radialen Richtung versetzt. Geeigneterweise überdeckt der Vorsprung den Magneten zumindest teilweise in tangentialer Richtung. Somit ist eine Bewegung des Magneten in der radialen Richtung mittels des Vorsprungs begrenzt, weswegen eine ungewollte Positionsänderung des Magneten vermieden ist.

Beispielsweise ist der Vorsprung bezüglich des Magneten in der radialen Richtung nach innen versetzt. Somit ist eine Bewegung des zugeordneten Magneten in der Richtung der Welle unterbunden, was eine Beschädigung der Welle vermeidet. Alternativ hierzu ist der Vorsprung bezüglich des Magneten in der radialen Richtung nach außen versetzt. Somit wird mittels des Vorsprungs ein Ablösen des jeweiligen Magneten in radialer Richtung nach außen unterbunden, beispielsweise aufgrund von Fliehkräften bei Betrieb der elektrischen Maschine und insbesondere einer Rotationsbewegung des Rotors. Geeigneterweise liegt der Vorsprung mechanisch direkt an dem jeweils zugeordneten Magneten an, was eine Bewegung des Magneten zuverlässig verhindert.

Vorzugsweise weist jeder erste Bereich mehrere derartige Vorsprünge auf. Beispielsweise ist hierbei der jeweils zugeordnete Magnet zwischen zweien der Vorsprünge in der radialen Richtung angeordnet. Vorzugsweise weist jeder erste Bereich vier derartige Vorsprünge auf, wobei jedem der beiden benachbarten Magneten jeweils zwei der Vorsprünge zugeordnet sind, und wobei jeder der Magnete in der radialen Richtung zwischen den beiden zugeordneten Vorsprüngen angeordnet ist, die insbesondere an dem jeweiligen zugeordneten Magneten mechanisch direkt anliegen. Somit wird jeder der Magnete des Abschnitts mittels insgesamt vierer derartiger Vorsprünge stabilisiert, von denen jeweils zwei unterschiedlichen ersten Bereichen zugeordnet sind. Somit ist ein Ablösen der Magnete von dem Abschnitt bei Betrieb unterbunden, was eine Sicherheit erhöht.

Zweckmäßigerweise liegt jeder erste Bereich mechanisch direkt an zumindest einem der beiden benachbarten Magneten an, insbesondere an beiden. Auf diese Weise werden die Magnete stabilisiert und eine Bewegung der Magnete ist verhindert. Beispielsweise ist zumindest teilweise ein Form- und/oder Kraftschluss zwischen jedem erste Bereich und einem der beiden benachbarten Magneten gebildet, sodass die Position der Magneten weiter stabilisiert ist.

Insbesondere weist jeder zweite Bereich einen in der radialen Richtung verlaufenden Steg auf. Zweckmäßigerweise besteht der zweite Bereich hierbei aus dem Steg. Der Steg ist beispielsweise quaderförmig ausgestaltet und weist somit senkrecht zur axialen Richtung einen im Wesentlichen rechteckförmigen Querschnitt auf. Auf der dem ersten Bereich gegenüberliegenden Seite ist das Ende des Stegs an der Welle befestigt. Somit ist der erste Bereich mittels des Stegs von der Welle beabstandet und an dieser befestigt. Vorzugsweise ist die Ausdehnung des Stegs in der tangentialen Richtung geringer als die Ausdehnung des jeweiligen ersten Bereichs in der tangentialen Richtung, vorzugsweise kleiner als die Hälfte, ein Viertel oder ein Zehntel der Ausdehnung. Somit ist ein Ausbreiten von Magnetfeldlinien über den Polschuh in Teile des Abschnitts, die radial innenliegend sind, mittels des Polschuhs verringert. Vorzugsweise befindet sich der Steg in der tangentialen Richtung auf einer der Seiten der jeweils zugeordneten ersten radialen Geraden. Geeigneterweise ist der Steg von einem etwaigen Ende des zugeordneten ersten Bereichs in der tangentialen Richtung beabstandet, was eine Stabilität des zweiten Bereichs erhöht.

Vorzugsweise ist das Ende des Stegs schwalbenschwanzförmig ausgestaltet. Mit anderen Worten weist das Ende des Stegs einen schwalbenschwanzförmigen Querschnitt senkrecht zu der axialen Richtung auf. Insbesondere ist das Ende form- und/oder kraftschlüssig in der Welle gehalten. Aufgrund der schwalbenschwanzförmigen Kontur ist ein Ablösen des zweiten Bereichs und somit des vollständigen Polschuhs von der Welle verhindert. Geeigneterweise weist die Welle eine zu der Anzahl der Polschuhe korrespondierende Anzahl von in der axialen Richtung verlaufender Nuten auf. Vorzugsweise ist die Anzahl der Nuten gleich der Anzahl der Polschuhe und somit gleich der Anzahl der zweiten Bereiche. Geeigneterweise ist jeder der Polschuhe mittels einer der Nuten befestigt. Hierbei liegt vorzugsweise das Ende des jeweiligen zweiten Bereichs in der jeweiligen Nut ein, vorzugsweise der etwaig vorhandene Steg, insbesondere das schwalbenschwanzförmigen Ende. Zur Montage wird vorzugsweise jeder Polschuh in der axialen Richtung in die jeweilige Nut zumindest teilweise eingeschoben. Auf diese Weise ist eine Montage vereinfacht, und es sind keine weiteren Befestigungsmittel erforderlich.

Besonders bevorzugt ist die Welle drehsymmetrisch ausgestaltet. Der Winkel der Drehsymmetrie ist zweckmäßigerweise gleich dem Bruch aus 360° und der Anzahl der Nuten. Mit anderen Worten ist der Winkel zwischen benachbarten Nuten gleich und konstant. Auf diese Weise ist eine Fertigung der Welle vereinfacht. Geeigneterweise ist hierbei der weitere Abschnitt vorhanden und der zweite Bereich des Abschnitts und des weiteren Abschnitts sind mit den Nuten an der Welle befestigt. Hierbei liegt ein Ende jedes zweiten Bereichs des Abschnitts vorzugsweise in jeweils einer der Nuten ein, und jede der Nuten ist somit einem der zweiten Bereiche zugeordnet. Ferner liegt in jeder der Nuten jeweils ein Enden jedes zweiten Bereiches des weiteren Abschnitts ein, sodass jeder Nut sowohl einer der zweiten Bereiche des Abschnitts und einer der zweiten Bereiche des weiteren Abschnitts zugeordnet ist. Somit fluchten die zweiten Bereiche des Abschnitts und des weiteren Abschnitts, und die ersten Bereiche des Abschnitts und des weiteren Abschnitts sind zueinander in der tangentialen Richtung versetzt, und insbesondere somit auch die jeweiligen Magneten. Folglich ist ein Rastmoment reduziert.

Jeder zweite Bereich ist insbesondere symmetrisch bezüglich einer jeweiligen zweiten radialen Geraden, die bezüglich der jeweils zugeordneten ersten radialen Geraden um einen Winkel verschwenkt ist. Mit anderen Worten weist jeder der zweiten Bereiche jeweils eine der zweiten radialen Geraden auf, wobei der erste Bereich des gleichen Polschuhs asymmetrisch bezüglich der zweiten radialen Geraden ist. Zwischen der ersten radialen Geraden und der zweiten radialen Geraden jedes Polschuhs ist hierbei der Winkel gebildet, dessen Scheitelpunkt insbesondere auf der Rotationsachse der Welle liegt. Die Winkel sämtlicher Polschuhe sind zweckmäßigerweise gleich. Sofern der weitere Abschnitt vorhanden ist und die zweiten Bereiche des Abschnitts und des weiteren Abschnitts miteinander fluchten, sind die ersten Bereiche des Abschnitts und des weiteren Abschnitts um das Doppelte des Winkels in tangentialer Richtung zueinander versetzt. Somit ist mittels Wahl der zweiten radialen Geraden der tangentiale Versatz einstellbar.

Besonders bevorzugt weist der Rotor eine Anzahl an Stützelementen auf, die aus einem para- oder diamagnetischen Material gefertigt sind. Mit anderen Worten ist die magnetische Permeabilität der Stützelemente größer als 1 und insbesondere kleiner als 10 oder zwischen 0 und 1. Beispielsweise sind die Stützelemente aus Aluminium, Kupfer oder einem Kunststoff, beispielsweise Polyethylen (PE) erstellt. Die Stützelemente sind vorzugsweise zwischen den ersten Bereichen und der Welle in der radialen Richtung angeordnet und dienen geeigneterweise der Stabilisation der ersten Bereiche bezüglich der Welle. Beispielsweise ist ein zwischen den ersten Bereichen und der Welle gebildeter Freiraum, der nicht mittels des zweiten Bereichs befüllt ist, mittels der Stützelemente ausgefüllt, insbesondere formschlüssig. Beispielsweise sind die Stützelemente mittels eines Vergusses erstellt. Aufgrund der Stützelemente werden die ersten Bereiche stabilisiert, was zu einem vergleichsweise robusten Rotor führt. Aufgrund des para- oder diamagnetischen Materials ist eine übermäßige Ausbildung von Magnetfeldlinien der Magnete in den Stützelementen im Wesentlichen unterbunden, weswegen ein magnetischer Kurzschluss zwischen benachbarten zweiten Bereichen unterbunden ist. Somit ist ein Wirkungsgrad der elektrischen Maschine erhöht.

Die elektrische Maschine ist beispielsweise ein Generator, bevorzugt jedoch ein Elektromotor, wie ein Synchronmotor, der insbesondere permanenterregt ist. Zweckmäßigerweise ist der Elektromotor bürstenlos. Der Elektromotor weist beispielsweise eine Nennleistung zwischen 3kW und 500kW auf, insbesondere zwischen 3kW und 200kW, oder aber zwischen 20kW und 350kW. Beispielsweise ist die Nenndrehzahl des Elektromotors zwischen 100 U/min und 4.000 U/min, zweckmäßigerweise zwischen 100 U/min und 200 U/min oder zwischen 350 U/min und 1.500 U/min. Insbesondere ist der Elektromotor ein Bestandteil einer Industrieanlage. Zweckmäßigerweise ist der Elektromotor ein Bestandteil eines Antriebs, mittels dessen bei Betrieb ein zu erstellendes oder zu bearbeitendes Werkstück zumindest teilweise bearbeitet wird.

Die elektrische Maschine weist einen Rotor mit einer Welle und einem die Welle zumindest abschnittsweise umgebenden Abschnitt auf. Der Abschnitt umfasst eine Anzahl an zueinander beabstandeten und in einer axialen Richtung angeordneten Magneten sowie eine Anzahl an zueinander beabstandeten und in der axialen Richtung angeordneten Polschuhen. Jeder Polschuh weist ein in einer radialen Richtung außenliegenden ersten Bereich, der zwischen in einer tangentialen Richtung benachbarten Magneten angeordnet und symmetrisch bezüglich einer zugeordneten ersten radialen Geraden ist, und einen in der radialen Richtung innenliegenden zweiten Bereich auf, der asymmetrisch bezüglich der jeweils zugeordneten ersten radialen Geraden ist, und der an der Welle angebunden ist. Insbesondere ist der Rotor drehbar gelagert, beispielsweise mittels einer Anzahl an Lagern, wobei sich der Abschnitt zweckmäßigerweise in der Axialrichtung zwischen zumindest zweien der Lagern befindet. Beispielsweise sind die Lager Reiblager oder besonders bevorzugt Wälzlager, wie Rollen- oder Kugellager. Zweckmäßigerweise ist die Welle drehbar um die Rotationsachse der Welle gelagert. Die elektrische Maschine weist ferner einen Stator auf, der beispielsweise mit einem Umrichter bestromt ist. Der Stator umgibt zweckmäßigerweise den Rotor umfangsseitig. Hierbei umgibt der Stator den Rotor beispielsweise in der vollständigen axialen Richtung oder zumindest einen Teil hiervon. Mit anderen Worten ist die elektrische Maschine ein Innenläufer.

Der Stator weist zweckmäßigerweise eine Anzahl an Magneten auf, die beispielsweise Elektromagneten mit jeweils einer elektrischen Spule sind. Insbesondere sind die elektrischen Spulen zu Phasen zusammengeschaltet, beispielsweise zu drei oder sechs Phasen. Zum Beispiel sind die Phasen miteinander in einer Dreiecks- oder Sternschaltung miteinander kontaktiert. Die Anzahl der Magneten des Stators ist gleich einer zweiten Anzahl, und die Anzahl der Magneten des Rotors ist gleich einer ersten Anzahl, wobei die Magneten des Rotors zweckmäßigerweise Permanentmagneten sind. Vorzugsweise ist der zweite Bereich jedes der Polschuhe bezüglich der zweiten radialen Geraden symmetrisch, die bezüglich der jeweils zugeordneten ersten radialen Geraden des gleichen Polschuhs um den Winkel verschwenkt ist. Der Winkel ist gleich dem Bruch aus 90° und dem kleinsten gemeinsamen Vielfachen der ersten Anzahl und der zweiten Anzahl. Mit anderen Worten wird zunächst das kleinste gemeinsame Vielfache der Magneten und des Rotors und des Stators bestimmt. Im Anschluss hieran wird 90° durch das kleinste gemeinsame Vielfache geteilt und das Ergebnis als der Winkel herangezogen. Somit ist ein vergleichsweise effizientes Rastmoment realisiert, wobei aufgrund des tangentialen Versatzes der Magneten des Rotors, sofern der Abschnitt und der weitere Abschnitt vorhanden ist, ein Wirkungsgrad vergleichsweise gering beeinflusst ist. Insbesondere entsprechen die erste Anzahl der Polzahl und die zweite Anzahl der Nutzahl, also der Anzahl der Nuten, die insbesondere gleich dem Produkt aus der Lochzahl, der Polzahl und den Strängen der elektrischen Maschine ist.

Die im Zusammenhang mit dem Rotor ausgeführten Weiterbildungen und Vorteile sind sinngemäß auch auf die jeweilige elektrische Maschine zu übertragen und umgekehrt.

Nachfolgend wird ein Ausführungsbeispiel der Erfindung anhand einer Zeichnung näher erläutert. Darin zeigen:
- Fig. 1: schematisch in einer Schnittdarstellung entlang einer axialen Richtung einen Elektromotor mit einem Rotor,
- Fig. 2: in einer Schnittdarstellung senkrecht zur axialen Richtung einen Abschnitt des Rotors,
- Fig. 3: in einer Schnittdarstellung senkrecht zur axialen Richtung einen weiteren Abschnitt des Rotors, und
- Fig. 4: schematisch den Rotor in einer Draufsicht.

Einander entsprechende Teile sind in allen Figuren mit den gleichen Bezugszeichen versehen.

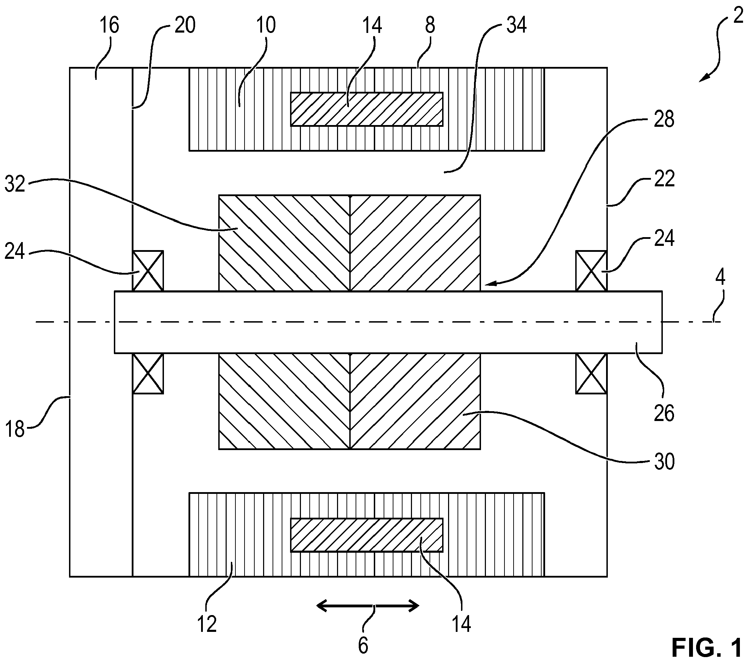

In Fig. 1 ist schematisch vereinfacht eine elektrische Maschine 2 in Form eines bürstenlos ausgestalteten Elektromotors in einer Schnittdarstellung längs einer Rotationsachse 4 dargestellt, die parallel zu einer axialen Richtung 6 (Axialrichtung) ist. Die elektrische Maschine 2 ist ein Bestandteil einer Industrieanlage und dient dem Antrieb eines nicht näher dargestellten Förderbandes. Die elektrische Maschine 2 weist einen innerhalb eines Gehäuses 8 angeordneten Stator 10 auf, der hohlzylindrisch ausgestaltet und konzentrisch zur Rotationsachse 4 angeordnet ist. Der Stator 10 weist ein Blechpaket 12 und eine zweite Anzahl an schematisch vereinfacht dargestellten Magneten 14 in Form von Elektromagneten mit jeweils einer elektrischen Spule auf. Die zweite Anzahl ist zwölf, und die elektrischen Spulen der Magneten 14 des Stators 10 sind zu drei Phasen zusammengeschaltet, die wiederum in einer Sternschaltung miteinander elektrisch kontaktiert sind.

Die Magneten 14 sind mittels einer Elektronik 16 bestromt, die innerhalb eines Elektronikgehäuses 18 angeordnet ist, das an einer Stirnseite des hohlzylindrisch ausgestalteten Gehäuses 8 angeordnet ist. Das Elektronikgehäuse 18 ist hierbei mittels eines B-seitigen Lagerschilds 20 von dem Gehäuse 8 getrennt oder auf das Gehäuse 8 aufgesetzt. Die dem B-seitigen Lager 20 gegenüberliegende Seite des Gehäuses 8 ist mittels eines A-seitigen Lagerschilds 22 verschlossen. An dem A-seitigen Lagerschild 22 und dem B-seitigen Lagerschild 20 ist jeweils ein Lager 24 in Form eines Kugellagers angebunden, mittels dessen eine Welle 26 eines Rotors 28 drehbar um die Rotationsachse 4 gelagert ist. Die Welle 26 ist aus einem Stahl erstellt und befindet sich auf der Rotationsachse 4.

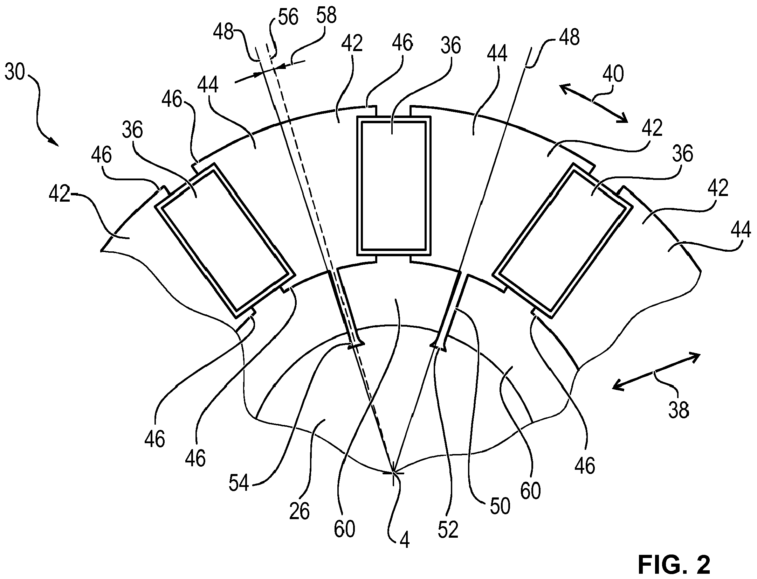

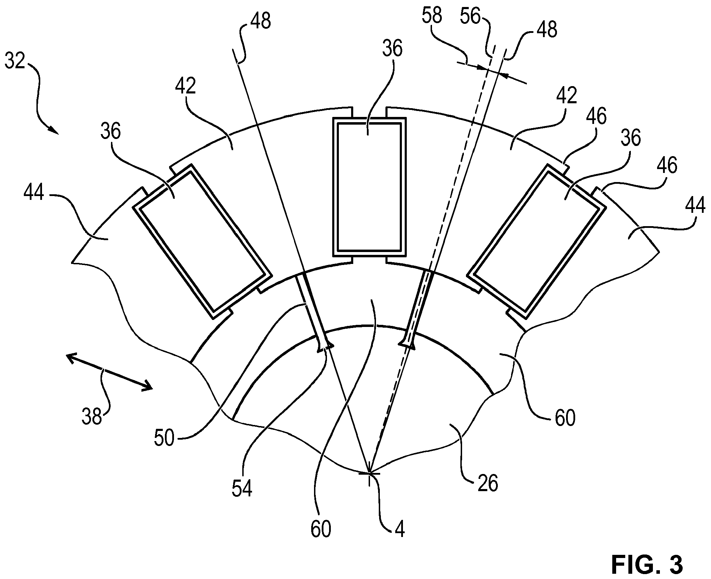

Der Rotor 28 weist ferner einen Abschnitt 30 und einen zweiten Abschnitt 32 auf, wobei der Abschnitt 30 in Fig. 2 in einer Schnittdarstellung senkrecht zur Rotationsachse 4 und somit senkrecht zur axialen Richtung 6 und der weitere Abschnitt 32 in Fig. 3 ebenfalls in einer Schnittdarstellung senkrecht zur Rotationsachse 4 gezeigt ist. Der Abschnitt 30 und der weitere Abschnitt 32 sind zueinander baugleich sowie konzentrisch zur Rotationsachse 4 angeordnet und umgeben die Welle 26. Zudem liegt der Abschnitt 30 in der axialen Richtung 6 an dem weiteren Abschnitt 32 stirnseitig an. Die Abschnitte 30, 32 und somit der Rotor 28 werden von dem Stator 10 umfangsseitig unter Ausbildung eines Luftspalts 34 umgeben.

Der Abschnitt 30 weist eine erste Anzahl an Magneten 36 auf. Die erste Anzahl ist zehn und die Magnete 36 des Abschnitts 30 sind Permanentmagneten, die aus einem Ferrit gefertigt und quaderförmig ausgestaltet sind. Die Magnete 36 sind hierbei zueinander baugleich und weisen in der axialen Richtung 6 die Ausdehnung des Abschnitts 30 auf. Ferner sind die Magneten 36 drehsymmetrisch bezüglich der Rotationsachse 4 und in der axialen Richtung 6 angeordnet sowie zueinander beabstandet. Die Magnete 36 des Abschnitts 30 sind somit zueinander bezüglich der Rotationsachse 4 um einen Winkel von 36° versetzt. Die Magneten 36 verlaufen in einer radialen Richtung 38. Mit anderen Worten weist der Abschnitt 30 ein sogenanntes "Speichen"-Design ("Spoke"-Design) auf.

In einer tangentialen Richtung 40 ist zwischen jeweils benachbarten Magneten 36 jeweils ein erster Bereich 42 eines Polschuhs 44 des Abschnitts 30 angeordnet. Somit weist der Abschnitt 30 ebenfalls insgesamt zehn derartige Polschuhe 44 auf, die zueinander beabstandet und in der axialen Richtung 6 angeordnet sind. Der Querschnitt jedes ersten Bereichs 42 ist ein Ringsegment, an dessen Enden in der radialen Richtung ein jeweils in der tangentialen Richtung 40 verlaufender Vorsprung 46 angebunden ist. Der erste Bereich 42 jedes Polschuhs 44 liegt in der tangentialen Richtung 40 mechanisch direkt an den benachbarten Magneten 36 an, und die Vorsprünge 46 sind bezüglich der benachbarten Magneten 36 in der radialen Richtung 38 versetzt und liegen ebenfalls an den jeweils benachbarten Magneten 36 an. Somit werden die Magneten 36 mittels der jeweils benachbarten Polschuhe 44 stabilisiert und gehalten. Jeder erste Bereich 42 ist bezüglich einer ersten radialen Geraden 48, also einer Geraden, die die Rotationsachse 4 schneidet, achsensymmetrisch, wobei auch die Vorsprünge 46 bezüglich der ersten radialen Geraden 48 symmetrisch sind. Die Magneten 36 des Rotors 28 sind in der tangentialen Richtung 40 magnetisiert, wobei jeweils gleiche Magnetpole aufeinander zu gerichtet sind. Somit treten die mittels der Magneten 36 des Rotors 28 bereitgestellten Magnetfeldlinien bei den ersten Bereichen 42, und hierbei hauptsächlich im Umfeld der ersten radialen Geraden 48m senkrecht aus diesen aus.

Jeder Polschuh 44 weist ferner einen zweiten Bereich 50 auf, der bezüglich des jeweiligen ersten Bereichs 42 in der radialen Richtung 38 nach innen versetzt und an diesem angebunden ist. Der zweite Bereich 50 besteht aus einem in der radialen Richtung 38 verlaufenden Steg, dessen eines Ende an dem jeweiligen ersten Bereich 42 angebunden ist, und dessen weiteres Ende 52, also das dem ersten Bereich 42 gegenüberliegende Ende, schwalbenschwanzförmig ausgestaltet ist und somit einen im Wesentliche trapezförmigen Querschnitt aufweist. Die Aufweitung ist hierbei von dem jeweiligen ersten Bereich 42 weg gerichtet. Das Ende 52 liegt formschlüssig in jeweils einer zugeordneten Nut 54 der Welle 26 ein, die in der axialen Richtung 6 verläuft. Somit ist jeder zweite Bereich 50 mit jeweils einer zugeordneten Nut 54 an der Welle 26 angebunden, und auch jeder Polschuh 44 ist somit mittels der jeweiligen Nut 54 an der Welle 26 befestigt. Der Steg 50 jedes Polschuhs 44 ist symmetrisch bezüglich einer jeweiligen zweiten radialen Geraden 56, die bezüglich der ersten radialen Geraden 48 des gleichen Polschuhs 44 um einen Winkel 58 verschwenkt ist. Folglich ist jedem Polschuh 44 eine der ersten Geraden 48 und eine der zweiten Geraden 56 zugeordnet, die sich jeweils auf der Rotationsachse 4 schneiden, und zwischen denen der Winkel 58 gebildet ist.

Hierbei ist der erste Bereich 42 jedes Polschuhs 44 symmetrisch bezüglich der jeweiligen ersten Geraden 48 und asymmetrisch bezüglich der jeweiligen zweiten Geraden 56, und der zweite Bereich 50 ist symmetrisch bezüglich der jeweiligen zweiten Geraden 56 und asymmetrisch bezüglich der jeweiligen ersten Geraden 48. Folglich ist der Steg bezüglich des Ringsegments seitlich versetzt, wobei die Versetzung in der tangentialen Richtung 40 bei allen Polschuhen 44 in die gleiche Richtung, in diesem Beispiel im Uhrzeigersinn, ist. Der Winkel 58 ist gleich dem Bruch aus 90° und dem kleinsten gemeinsamen Vielfachen der ersten Anzahl und der zweiten Anzahl, also der Anzahl der Magneten 36 des Rotors 28 und der Anzahl der Magneten 14 des Stators 10. Somit ist der Winkel 58 gleich 90°/60 und folglich gleich 1,5°.

Jeder Polschuh 44 ist mittels eines Blechpakets gebildet, dessen Bleche in der axialen Richtung 6 aufeinander gestapelt sind. Hierbei weist jedes Blech die Form des Querschnitts des Polschuhs 44 auf, der in Fig. 2 gezeigt ist, und jede Blechlage des Polschuhs 44 ist einstückig, sodass der zweite Bereich 50, der erste Bereich 42, sowie die Vorsprünge 46 stabil aneinander befestigt sind.

Zwischen der Welle 26 und den ersten Bereichen 42 ist eine Anzahl an Stützelementen 60 des Abschnitts 30 angeordnet, die den zwischen der Welle 26 und den Polschuhen 44 gebildeten Raum vollständig ausfüllen. Die Stützelemente 60 sind aus einem para- oder diamagnetischen Material gefertigt, insbesondere aus einem Kunststoff. Mittels der Stützelemente 60 wird hierbei ein Abknicken der ersten Bereiche 42 aufgrund der vergleichsweise filigranen Anbindung an der Welle 26 mittels der zweiten Bereiche 50 vermieden, sodass die Stabilität des Rotors 28 erhöht ist. Da die Stützelemente 60 aus dem para- oder diamagnetischen Material gefertigt sind, breiten sich hierbei die mittels der Magneten 36 bereitgestellten Magnetfelder vergleichsweise gering in diesen aus, sodass ein magnetischer Kurzschluss lediglich mittels der zweiten Bereiche 50 und der Welle 26 erfolgen kann. Folglich wird der Großteil der Magnetfeldlinien der Magneten 36 in den Luftspalt 34 und somit zu dem Stator 10 gedrängt, was einen Wirkungsgrad erhöht.

Der Abschnitt 30 und der weitere Abschnitt 32 sind zueinander baugleich, wobei der weitere Abschnitt 32 bezüglich des Abschnitts 30 um eine radiale Achse um 180° gedreht ist. Somit sind bei den Polschuhen 44 des weiteren Abschnitt 32 die zweiten Bereiche 50 bezüglich der jeweiligen ersten radialen Geraden 38 entgegen des Uhrzeigersinns versetzt.

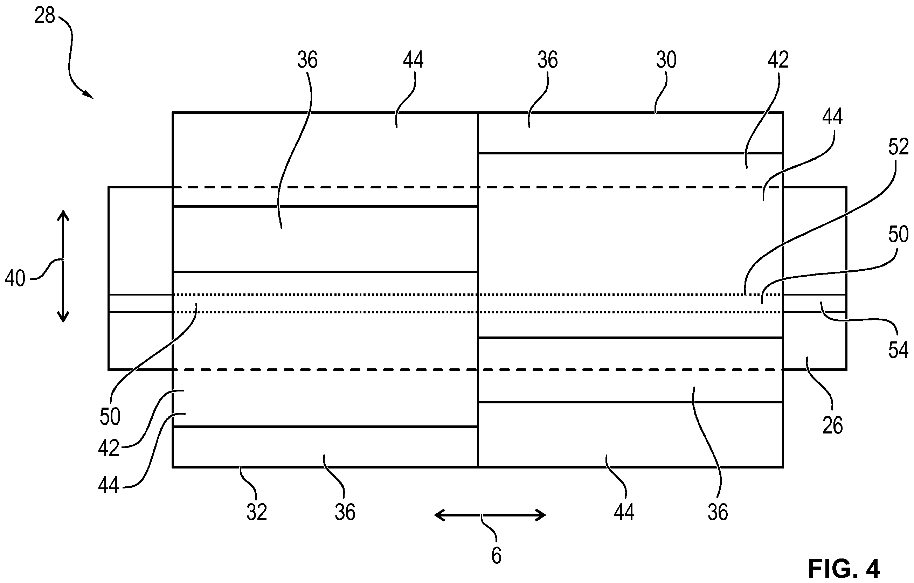

In Fig. 4 ist der Rotor 28 in einer Draufsicht dargestellt. Die Welle 26 ragt durch den Abschnitt 30 und den weiteren Abschnitt 32 hindurch, und der Abschnitt 30 ist bezüglich des weiteren Abschnitts 32 in der Axialrichtung 6 versetzt und die beiden Abschnitte 30, 32 liegen stirnseitig aneinander an. Die Enden 52 der zweiten Bereiche 50 liegen in den Nuten 54 ein, wobei jeder der Nuten 54 jeweils einem der zweiten Bereiche 50 des Abschnitts 30 und einem der zweiten Bereiche 50 des weiteren Abschnitts 32 zugeordnet sind. Somit fluchtet jeder der zweiten Bereiche 50 des Abschnitts 30 mit jeweils einem der zweiten Bereiche 50 des weiteren Abschnitts 32 und umgekehrt. Infolgedessen sind aufgrund des Versatzes der ersten radialen Geraden 48 und der zweiten radialen Geraden 56 jeder der Polschuhe 44 die ersten Bereiche 42 des Abschnitts 30 und die ersten Bereiche 42 des weiteren Abschnitts 32 in der Tangentialrichtung (tangentiale Richtung) 40 zueinander versetzt, und zwar um das Doppelte des Winkels 58 und somit um 3°. Folglich sind auch die Magnete 36 des Abschnitts 30 und die Magnete 36 des weiteren Abschnitts 32 in tangentialer Richtung zueinander um 3° versetzt. Somit ist Rastmoment der elektrischen Maschine 2 verringert.

Zusammenfassend ist mittels der Stützelemente 60 ein magnetischer Kurzschluss unterbunden, und die Stützelemente 60 sind beispielsweise aus einem Kunststoff erstellt. Somit ist es ermöglicht, die Breite des Stegs der zweiten Bereiche 50 verbreitert auszugestalten, weswegen eine mechanische Belastung verringert ist, wobei die elektrische Leistung der elektrischen Maschine 2 unverändert bleibt oder steigt. Aufgrund des Versatzes jedes zweiten Bereichs 50 bezüglich des jeweils zugeordneten ersten Bereichs 42 um den Winkel 58 ist der Rotor 28 schräg aufgebaut, weswegen ein Rastmoment reduziert ist. Hierbei werden die Abschnitte 30, 32 um 180° gedreht montiert. Aufgrund der Stützelemente 60 ist eine mechanische Beanspruchung verbessert und eine Leistung der elektrischen Maschine 2 erhöht. Aufgrund des Versatzes der zweiten Bereiche 50 werden Rastmomente reduziert, sodass der Rotor 28 geschrägt ist, und wobei eine Montage vereinfacht ist.

Folglich ist jeder Abschnitt 30, 32 im Wesentlichen segmentiert, weswegen ein Werkzeug zur Herstellung der Polschuhe 44 vergleichsweise klein ausgestaltet sein kann, auch wenn die elektrische Maschine 2, insbesondere der Rotor 28, einen vergleichsweise großen Durchmesser aufweist. Ferner ist aufgrund des zweiten Bereiches 50 eine Leistungssteigerung möglich. Die Polschuhe 44 werden auf die Welle 26 gesteckt, wobei je nach Anzahl der Pole die Anzahl der Polschuhe 44 und somit der ersten und zweiten Bereiche 42, 50 variiert. Zwischen den ersten Bereichen 42 wird in tangentialer Richtung 40 bei Montage die bereits magnetisierten Magnete 36 positioniert. Die zweiten Bereiche 50 sind bezüglich der jeweiligen ersten Geraden 48 um den Winkel 58 versetzt. Aufgrund der Drehung des zweiten Abschnitts 32 bezüglich des Abschnitts 30 um 180° ist eine Schrägung des Rotors 28 realisiert, weswegen Rastmomente reduziert werden. Der Winkel 58 ist hierbei abhängig von der Anzahl der Magneten 14 (elektrischen Spulen) des Stators 10 und der Anzahl der Magneten 36 des Rotors 28 und somit von der Polpaarzahl und der Nutpaarzahl. Der Winkel 58 ist hierbei der Bruch aus 90° und dem kleinsten gemeinsamen Vielfachen aus der Nutpaarzahl und dem Doppelten der Polpaarzahl, also der Polzahl. Vorzugsweise sind im Rotor 28 eine geradzahlige Anzahl von Magneten 36 gesteckt. Zur Realisierung von geschrägten Rotoren 28 sind pro Pol ebenfalls eine gradzahlige Anzahl an Magnete 36 pro Pol vorhanden.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: elektrische Maschine
- 4: Rotationsachse
- 6: axiale Richtung
- 8: Gehäuse
- 10: Stator
- 12: Blechpaket
- 14: Magnet des Stators
- 16: Elektronik
- 18: Elektronikgehäuse
- 20: B-seitiges Lagerschild
- 22: A-seitiges Lagerschild
- 24: Lager
- 26: Welle
- 28: Rotor
- 30: Abschnitt
- 32: weiterer Abschnitt
- 34: Luftspalt
- 36: Magnet des Rotors
- 38: radiale Richtung
- 40: tangentiale Richtung
- 42: erster Bereich
- 44: Polschuh
- 46: Vorsprung
- 48: erste radiale Gerade
- 50: zweiter Bereich
- 52: Ende
- 54: Nut
- 56: zweite radiale Gerade
- 58: Winkel
- 60: Stützelement

## Patentansprüche

1. Rotor (28) einer elektrischen Maschine (2), mit einer Welle (26) und einem die Welle (26) zumindest abschnittsweise umgebenden Abschnitt (30), der eine Anzahl an zueinander beabstandeten und in einer axialen Richtung (6) angeordneten Magneten (36) und eine Anzahl an zueinander beabstandeten und in der axialen Richtung (6) angeordneten Polschuhen (44) aufweist, wobei jeder Polschuh (44) einen in einer radialen Richtung (38) außenliegenden ersten Bereich (42), der zwischen in einer tangentialen Richtung (40) benachbarten Magneten (36) angeordnet und symmetrisch bezüglich einer zugeordneten ersten radialen Geraden (48) ist, und einen in der radialen Richtung (38) innenliegenden zweiten Bereich (50) umfasst, der asymmetrisch bezüglich der jeweils zugeordneten ersten radialen Geraden (48) ist, und der an der Welle (26) angebunden ist.

2. Rotor (28) nach Anspruch 1,
**gekennzeichnet durch**
einen weiteren Abschnitt (32), der bezüglich des Abschnitts (30) in der axialen Richtung (6) versetzt ist, und der baugleich zu dem Abschnitt (30) und bezüglich des Abschnitts (30) um eine radialen Achse um 180 ° gedreht ist, wobei die ersten Bereiche (42) des Abschnitts (30) und die ersten Bereiche (42) des weiteren Abschnitts (32) in der tangentialer Richtung (40) zueinander versetzt sind.

3. Rotor (28) nach Anspruch 2,
**dadurch gekennzeichnet,**
**dass** jeder der zweiten Bereiche (50) des Abschnitts (30) mit jeweils einem der zweiten Bereiche (50) des weiteren Abschnitts (32) fluchtet.

4. Rotor (28) nach einem der Ansprüche 1 bis 3,
**dadurch gekennzeichnet,**
**dass** der Querschnitt jedes ersten Bereichs (42) ein Ringsegment aufweist, an dem ein in der tangentialen Richtung (40) verlaufender Vorsprung (46) angebunden ist, der bezüglich eines der benachbarten Magneten (36) in der radialen Richtung (38) versetzt ist.

5. Rotor (28) nach einem der Ansprüche 1 bis 4,
**dadurch gekennzeichnet,**
**dass** jeder erste Bereich (42) mechanisch direkt an den beiden zugordneten Magneten (36) anliegt.

6. Rotor (28) nach einem der Ansprüche 1 bis 5,
**dadurch gekennzeichnet,**
**dass** jeder zweite Bereich (50) einen in der radialen Richtung (38) verlaufenden Steg aufweist, der auf der dem zugeordneten ersten Bereich (42) gegenüberliegenden Ende (52) an der Welle befestigt ist.

7. Rotor (28) nach Anspruch 6,
**dadurch gekennzeichnet,**
**dass** das Ende (52) schalbenschwanzförmig ausgestaltet ist.

8. Rotor (28) nach einem der Ansprüche 1 bis 7,
**dadurch gekennzeichnet,**
**dass** jeder zweite Bereich (50) symmetrisch bezüglich einer jeweiligen zweiten radialen Geraden (56) ist, die bezüglich der jeweils zugeordneten ersten radialen Geraden (48) um einen Winkel (58) verschwenkt ist.

9. Rotor (28) nach einem der Ansprüche 1 bis 8,
**dadurch gekennzeichnet,**
**dass** zwischen der Welle (26) und den ersten Bereichen (42) eine Anzahl an Stützelementen (60) aus einem para- oder diamagnetischen Material angeordnet ist.

10. Elektrische Maschine (2), insbesondere Elektromotor, mit einem Rotor (28) nach einem der Ansprüche 1 bis 9, und mit einem Stator (10), der den Rotor (28) umfangsseitig umgibt.

11. Elektrische Maschine (2), insbesondere Elektromotor, mit einem Rotor (28) nach Anspruch 8, und mit einem Stator (10), der den Rotor (28) umfangsseitig umgibt, wobei die Anzahl der Magneten (36) der Rotors (28) gleich einer ersten Anzahl ist, und wobei der Stator (10) eine zweite Anzahl an Magneten (14) aufweist, und wobei der Winkel (58) gleich dem Bruch aus 90° und dem kleinsten gemeinsamen Vielfachen der ersten Anzahl und der zweiten Anzahl ist.
